# EUROPEAN PATENT APPLICATION

(11) **EP 0 899 800 A2**
(43) Date of publication of application: **03.03.1999**
(21) Application number: 98110880.6
(22) Date of filing: 15.06.1998
(51) Int. Cl.: H01M 2/10, F16B 12/32, A47B 47/02

(54) **Assembling set of elements for assembling scaffoldings**

(30) Priority: 24.06.1997 IT MI970458 U
(71) Applicant: Besana Applicazioni Plastiche S.r.l., 20058 Villasanta (Milano) (IT)
(72) Inventor: Besana, Marcello, 20058 Villasanta (Milano) (IT)
(74) Representative: Cicogna, Franco

(57) **Abstract**

An assembling set for assembling scaffoldings for housing electric batteries comprises coupling elements for coupling uprights (2) and cross-members (3) each including a pair of symmetrical section members which can be adjoined one another and provided with a perforated portion (10,10'), for engaging therein a screw (9) and locking nut (17), as well as a pair of L-shape portions (8,8'',12,12') coupling each perforated portion, thereby, as the section members are adjoined, a cross-member receiving recess is defined therein. Each cross-member is provided in its inside with threaded elements, coaxial therewith, and provided for receiving a connecting screw for connecting the cross-member to a corresponding support element. The supporting feet comprise a screw embedded in a supporting element contacting the ground and a ring-nut engaging with said screw in order to adjust the height of the supporting element associated with said foot element.

## Description

### BACKGROUND OF THE INVENTION

The present invention relates to an assembling set of elements for assembling scaffoldings. More specifically, the assembling set of elements according to the invention may be used for assembling scaffoldings for housing electric batteries therein.

It is already known in the prior art to provide banks of electric batteries for supplying electric power to industrial systems, hospitals, public premises and so on under emergency conditions. This banks of electric batteries are conventionally assembled by arranging the individual electric batteries in overlapping rows, as supported by a plurality of scaffoldings, in turn mounted on suitable vertical supporting elements.

More specifically, prior scaffoldings for the above mentioned application usually comprise a plurality of supporting elements connected to one another by cross-members supporting one or more rows of uprights. Generally, in order to stiffen the construction provided for supporting the weights of the electric batteries, diagonal elements coupled to the uprights are moreover used. The connection between the uprights and cross-members is carried out by a section member having a recessed portion thereof the shape of which depends on the cross-member cross-section shape, as well as two perforated wings. The section member can be used for coupling two elements forming the mentioned upright to a cross-members thereagainst the section member abuts by its central portion.

The invention sets out to make the above mentioned scaffoldings with a simpler construction and a more rational use of the elements constituting said scaffoldings.

### SUMMARY OF THE INVENTION

Accordingly, a main object of the present invention is to provide an assembly set of elements for assembling scaffoldings for electric batteries including a small number of structural elements.

Another object of the present invention is to provide such an assembling set of elements allowing to easily disassemble the structural component elements thereof, thereby facilitating the transport of the scaffolding constructional elements.

According to one aspect of the present invention the above mentioned objects are achieved by an assembling set of elements for assembling scaffoldings for housing electric batteries therein, said scaffolding being of a type comprising a plurality of uprights supported by supporting elements including cross-members, a plurality of connecting elements for connecting the uprights and cross-members and a plurality of foot elements for said supporting elements, characterized in that said elements for coupling said uprights and cross-members comprise at least a pair of symmetrical section members, each of which is provided for engagement in a recess formed in said uprights and each being provided with a perforated portion therethrough fixing means are engaged, and that each said cross-member is provided, in the inside thereof, with threaded elements coaxial with said cross-member and adapted to receive a connecting screw for connecting said cross-member to corresponding supporting elements therefor.

According to a preferred embodiment of the invention, each symmetrical section member comprises a first and second portion, arranged with a L arrangement with respect to one another, each of which extends from each said perforated portion, said first portion being provided for engagement in one of the recesses formed in said uprights, thereby the section members, as they are brought to a mutual adjoining relationship, define a seat for housing therein said cross-members.

According to a further preferred embodiment of the invention, each said upright comprises a further recess or slot for receiving therein one of said section members to allow the coupled section members to connect two adjoining uprights. Moreover, the supporting feet comprise a screw embedded in a supporting element contacting the ground and a ring-nut engaging said screw to adjust the height of the supporting element associated with the foot element.

The invention provides, with respect to the prior art, the following advantages. Firstly, each of the connecting elements coupling the uprights and cross-members, requires a single connecting screw and the related nut, thereby allowing to reduce the material and time required for assembling the scaffolding. Secondly, the assembling system of the invention is suitable for connecting both a cross-member to an end upright, and a central or middle cross-member to two adjoining uprights. Moreover, the provision of cross-members provided with inner threaded elements allows to easily construct a very simple system for assembling and disassembling the cross-member/supporting element sets, while facilitating the shipment of the scaffoldings to the assembling place.

### BRIEF DESCRIPTION OF THE DRAWINGS

Further advantages and characteristics of the present invention will become more apparent hereinafter from the following disclosure, given by way of an illustrative but not limitative example, with reference to the accompanying drawings:
Figure 1 is an axonometric view of a scaffolding for housing electric batteries therein;
Figure 2 is a further axonometric view illustrating the connecting element for connecting cross-members and uprights, according to the present invention, in the use condition thereof;
Figure 3 is a cross-sectional view taken substantially along a plane perpendicular to the cross-member of the connecting element according to the invention;
Figure 4 is a further axonometric view, in exploded form, illustrating the main components of the connecting element for connecting cross-members and uprights according to the invention;
Figure 5 is a further cross-sectional view, substantially taken along a plane parallel to the axis of the upright, of the threaded element according to the invention, which is coaxial with the cross-member engaging the upright;
Figure 6 is a partial cross-section view illustrating a supporting foot element for supporting the scaffolding according to the invention; and
Figure 7 is a further axonometric view illustrating a detail of the connection between diagonal elements and vertical supporting elements according to the present invention.

### DESCRIPTION OF THE PREFERRED EMBODIMENTS

In the following disclosure reference will be made to some preferred embodiments of the invention which are illustrated, by way of an exemplary not limitative example of the possible variations of the invention, coming within the scope of the accompanying claims.

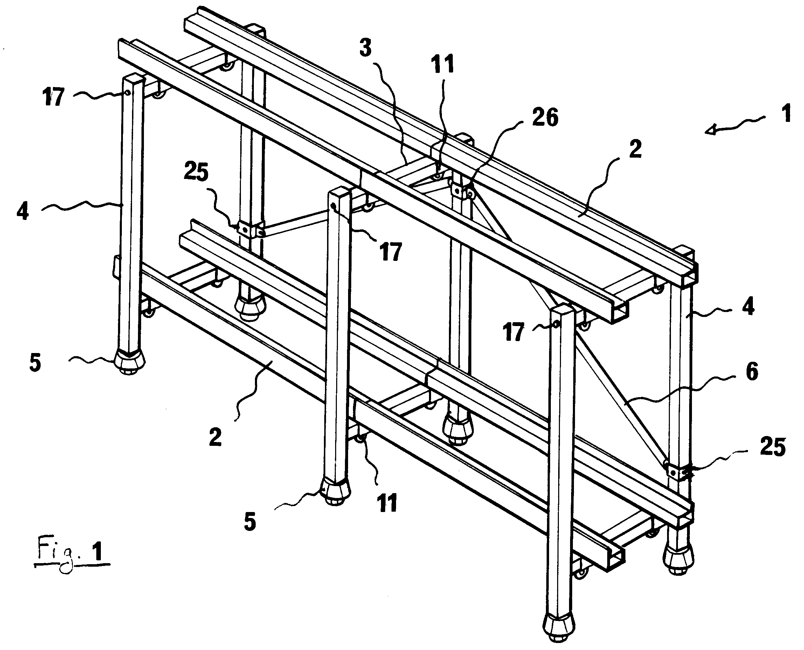

Figure 1 is an axonometric view illustrating a scaffolding of a type which is generally used for housing electric batteries therein. The scaffolding, generally indicated by the reference number 1, comprises a plurality of supporting elements 4, in turn supported by adjustable foot elements 5, which are connected by pairs to the cross-members 3.

The cross-members 3, in turn, support the uprights 2 thereon the electric batteries (not shown) are arranged. The scaffolding 1 is stiffened by diagonal elements 6, coupled to the supporting elements 4 by the connecting elements 25.

Figure 2 shows a connecting element, generally indicated by the reference number 11, which is engaged to connect a cross-member 3 and an upright 2. Said connecting element 11 comprises a pair of metal section-members which are symmetrically arranged to house the cross-member 3. In particular, each said section member comprises perforated portions 10 and 10', and L-shape portions including a first portion 8, 8' and a second portion 12, 12'. Said L-shape portions are coupled to said perforated portions 10, 10' by coupling segments 18 and 18'.

In order to locate in its engagement position the connecting element 11, each said portion 12, 12' is threaded into corresponding slots 30 and 31, formed on the bottom surface 50 of the upright 2. Said section members are so arranged that the portions 12 and 12' face outwardly so as to cause the portions 8 and 8' to move toward one another, thereby said segments 18 and 18' will provide, in combination, a housing for the cross-member 3. Then, said two section members will be connected and fixed in their connected position by engaging the screw 9 in the holes of the perforated portions 10 and 10' and by clamping the screw by the clamping or locking nut 47.

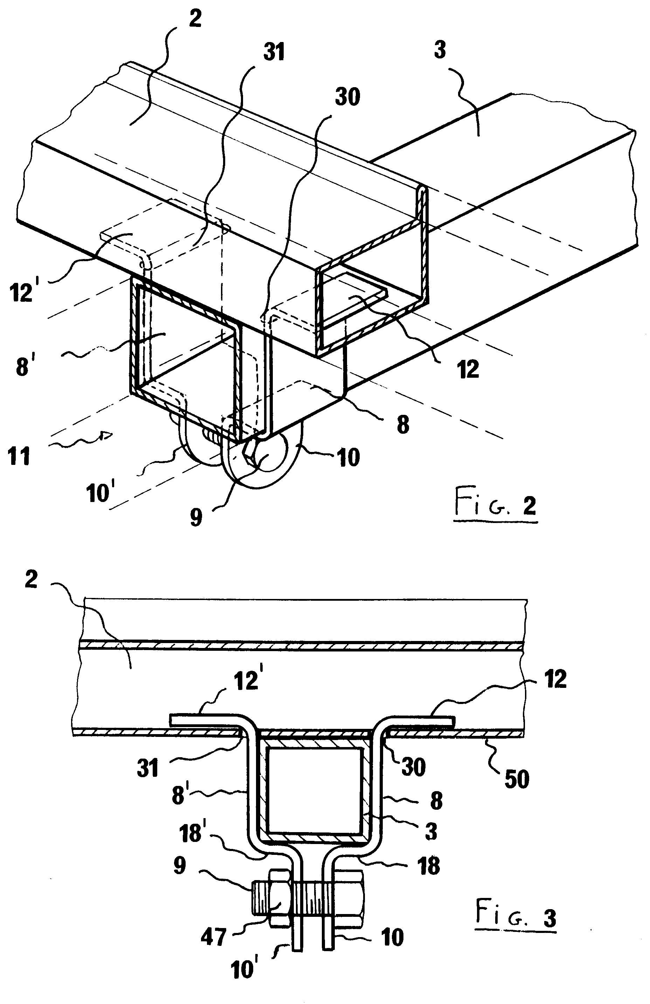

The above mentioned special arrangement of the section members is also shown in Figure 3, in which the connecting element 11 is illustrated in cross-section substantially taken through a plane perpendicular to the cross-member 3. In this figure are also shown the portions 12 and 12' engaged in the slots 30 and 31 and outwardly facing.

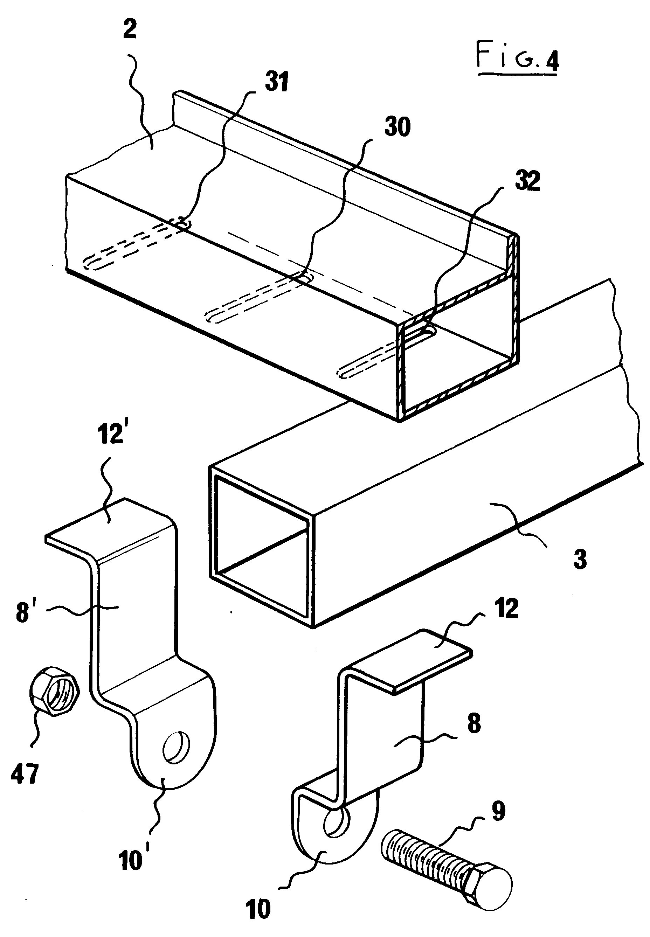

Figure 4 is an exploded view clearly illustrating the components of the connecting elements for connecting the cross-members 3 and uprights 2. In this figure, the cross-member portion 2 is provided, according to a preferred embodiment of the invention, in addition to the above mentioned slots 30 and 31, with a third additional slot 32.

The provision of this slot 32 will allow an upright 2 to be easily connected to a like adjoining upright (not shown) in the central part of the scaffolding 1. In fact, in this case, it will be possible to thread the portion 12', pertaining to one of the L-shape portions of the connecting element 11, into the slot 32, while engaging the portion 12 in the corresponding slot formed on the adjoining upright, and connect the two uprights to the cross-member 3, by coupling, by the nut 47 and screw 9, the perforated portions 10 and 10', as disclosed with reference to figures 2 and 3.

Figure 5 illustrates a cross-sectional view, substantially taken through a plane parallel to the axis of the upright 4 of a threaded element 16, which is coaxially connected to the cross-member 3. The threaded element 16, in particular, receives therein the screw 27 to connect the cross-member 3 to the corresponding supporting element 4.

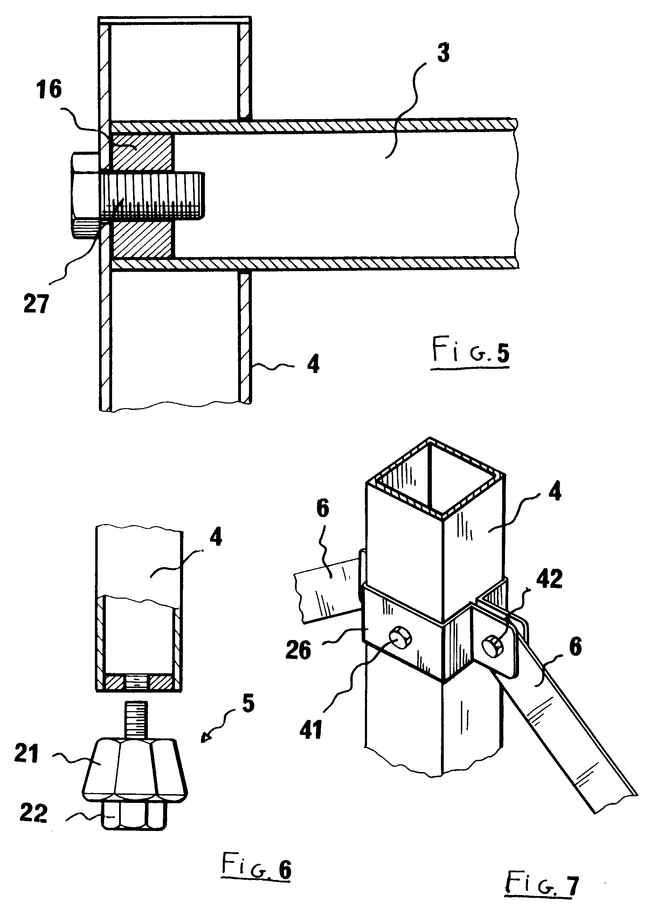

Figure 6 is a partial cross-sectional view illustrating a supporting foot element for supporting the scaffolding 1. More specifically, the foot element 5 comprises a screw 29 embedded in a supporting element 22 contacting the ground and a ring-nut 21 engaging with the screw 29 so as to make an adjustment of the supporting element 4 engaged with the foot element 5 possible.

Figure 7 is an axonometric view illustrating a detail of the connection between the diagonal elements 6 and vertical supporting elements 4, according to the present invention. This connection is preferably made by two symmetrical section members 26 which can be brought to a mutual adjoining relationship. Said section members 26, in particular, are so designed that, in an adjoining position, they will encompass the substantially rectangular cross-section profile or contour of the supporting element 4. In particular, the section members 26 are brought to their mutual adjoining relationship so as to connect the end portions of the diagonal elements 6, and being then fixed in their operating position by a screw 41 engaged in the supporting element 4 and by screw 42 connecting the end portions of the diagonal elements 6 inside said adjoined section members.

Alternately to the above disclosed solution, it would be also possible to connect the supporting elements 4 and cross-members 3 by using for said supporting elements 4 pipes of circular cross-section and ending with a deformed or bossed contour, adapted to be engaged in suitable recesses formed in the cross-members 3.

This solution, owing to its modular features, will allow the scaffolding 1 to be quickly and easily assembled.

Moreover, it is further possible, to use a metal element, for example of an iron material, of U cross-section, to be inserted into each of said uprights 2, to increase the structural stiffness thereof and prevent said uprights from being deformed by the weights of the supported batteries.

## Claims

1. An assembling set of elements for assembling scaffoldings for housing electric batteries therein, said scaffolding being of a type comprising a plurality of uprights supported by supporting elements including cross-members, a plurality of connecting elements for connecting the uprights and cross-members and a plurality of foot elements for said supporting elements, characterized in that said elements for coupling said uprights and cross-members comprise at least a pair of symmetrical section members, each of which is provided for engagement in a recess formed in said uprights and each being provided with a perforated portion therethrough fixing means are engaged, and that each said cross-member is provided, in the inside thereof, with threaded elements coaxial with said cross-member and adapted to receive a connecting screw for connecting said cross-member to corresponding supporting elements therefor.

2. An assembling set of elements according to Claim 1, characterized in that each said symmetrical section-member comprises a first and a second portion, arranged with a L-shape arrangement, and extended from each of said perforated portions, said first portion being engageable in one of said slots formed in said uprights, thereby said section members, as they are brought to a mutual adjoined relationship, will define a seat for receiving therein said cross-members.

3. An assembling set of elements according to Claim 1, characterized in that each said upright comprises a further slot for receiving therein one of said section members thereby allowing said section members to connect two adjoining uprights.

4. An assembling set of elements according to Claim 1, characterized in that said fixing means engaging said perforated portions comprise a screw and a nut assembly.

5. An assembling set of elements according to Claim 1, characterized in that said supporting foot elements comprise a screw embedded in a supporting element contacting the ground and a ring-nut engaging said screw so as to adjust the height of the supporting element associated with said foot element.
